# FASCICULE DE BREVET EUROPEEN

(11) **EP 1 627 852 B1**
(45) Date de publication et mention de la délivrance du brevet: **12.10.2011**
(21) Numéro de dépôt: 05291107.0
(22) Date de dépôt: 23.05.2005
(51) Int. Cl.: C01G 49/00

(54) **Matériau aluminosilicate mésostructuré**
Mesostrukturiertes aluminosilikates Material
Mesostructured aluminosilicate material

(30) Priorité: 24.06.2004 FR 0406938
(43) Date de publication de la demande: 22.02.2006
(73) Titulaire: Institut Français du Pétrole, 92852 Rueil Malmaison Cedex (FR)
(72) Inventeur: Chaumonnot, Alexandra, 69008 Lyon (FR); Coupe, Aurélie, 77186 Noisiel (FR); Sanchez, Clément, 91190 Gif-sur-Yvette (FR); Euzen, Patrick, 75015 Paris (FR); Boissière, Cédric, 75013 Paris (FR); Grosso, David, 92500 Rueil Malmaison (FR)

(56) Documents cités:
- WO-A-99/37705
- FR-A- 2 800 300
- US-A1- 2004 192 947
- US-B1- 6 387 453
- GALO J. DE A.A. SOLER-ILLIA; CLEMENT SANCHEZ, BENEDICTE LEBEAU, JOEL PATARIN: "cHEMICAL STRATEGIES TO DESIGN TEXTURED MATERIALS: FROM MICROPOROUS AND MESOPOROUS OXIDES TO NANONETWORKS AND HIERARCHICAL STRUCTURES" CHEM.REV., vol. 102, 25 octobre 2002 (2002-10-25), pages 4093-4138, XP002308089
- C.J. BRINKER, Y.LU, A. SELLINGER, H. FAN: "EVAPORATION INDUCED SELF-ASSEMBLY NANOSTRUCTURES MADE EASY" ADVANCED MATERIALS, vol. 11, no. 7, 1999, pages 579-585, XP002308090 WEINHEIM
- ARNE KARLSSON, MICHAEL STÖCKER, RALF SCHMIDT: "Composites of micro- and mesoporous materials: simultaneous synthesis of MFI/MCM-41 like phases by a mixed template approach" MICROPOROUS AND MICROPOROUS MATERIALS, vol. 27, 1999, pages 181-192, XP002308091

## Description

La présente invention se rapporte au domaine des matériaux aluminosilicates mésostructurés à forte teneur en aluminium. Elle concerne également la préparation de ces matériaux qui sont obtenus par l'emploi de la technique de synthèse dite "aérosol". Les propriétés structurales et texturales des matériaux selon l'invention ainsi que leurs propriétés acido-basiques les rendent particulièrement adaptés pour des applications dans le domaine du raffinage et de la pétrochimie.

### Etat de la technique antérieure

Les nouvelles stratégies de synthèse permettant d'obtenir des matériaux à porosité définie dans une très large gamme, allant des matériaux microporeux aux matériaux macroporeux en passant par des matériaux à porosité hiérarchisée, c'est-à-dire ayant des pores de plusieurs tailles, connaissent un très large développement au sein de la communauté scientifique depuis le milieu des années 90 (G. J. de A. A. Soler-Illia, C. Sanchez, B. Lebeau, J. Patarin, Chem. Rev., 2002, 102, 4093). On obtient des matériaux dont la traille des pores est contrôlée. En particulier, le développement de méthodes de synthèse dites de "chimie douce" a conduit à l'élaboration de matériaux mésostructurés à basse température par la coexistence en solution aqueuse ou dans des solvants de polarité marqué de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse / condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif régi, entre autres, par la concentration en agent structurant peut être induit par évaporation progressive d'une solution de réactifs dont la concentration en agent structurant est inférieure à la concentration micellaire critique, ce qui conduit soit à la formation de films mésostructurés dans le cas d'un dépôt sur substrat (technique "dip-coating"), soit à la formation d'une poudre mésostructurée après atomisation de la solution (technique aérosol). A titre d'exemple, le brevet US 6.387.453 divulgue la formation de films hybrides organiques - inorganiques mésostructurés par la technique de "dip-coating", ces mêmes auteurs ayant par ailleurs utilisé la technique aérosol pour élaborer des matériaux purement siliciques mésostructurés (C. J. Brinker, Y. Lu, A. Sellinger, H. Fan, Adv. Mater., 1999, 11, 7). La libération de la porosité est ensuite obtenue par élimination du tensioactif, celle-ci étant réalisée classiquement par des procédés d'extraction chimique ou par traitement thermique. En fonction de la nature des précurseurs inorganiques et de l'agent structurant employé ainsi que des conditions opératoires imposées, plusieurs familles de matériaux mésostructurés ont été développées. Pour exemple, la famille M41 S initialement développée par Mobil (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), constituée de matériaux mésoporeux obtenus via l'emploi de tensioactifs ioniques comme des sels d'ammonium quaternaire, possédant une structure généralement hexagonale, cubique ou lamellaire, des pores de taille uniforme comprise dans une gamme de 1,5 à 10 nm et des parois amorphes d'épaisseur de l'ordre de 1 à 2 nm a largement été étudiée. Par la suite, afin d'accroître les propriétés de stabilité hydrothermale tout en développant des propriétés d'acido-basicité relatives à ces matériaux, l'incorporation de l'élément aluminium dans la charpente silicique amorphe par synthèse directe ou par des procédés de post-synthèse a été particulièrement regardée, les matériaux aluminosilicates obtenus possédant un rapport molaire Si/Al compris dans une gamme de 1 à 1000 (S. Kawi, S. C. Shen, Stud. Surf. Sci. Catal., 2000,129, 227 ; S. Kawi, S. C. Shen, Stud. Surf. Sci. Catal., 2000,129, 219 ; R. Mokaya, W. Jones, Chem. Commun., 1997, 2185). Les propriétés de stabilité hydrothermale et les propriétés d'acido-basicité ainsi développées par ces aluminosilicates n'ont cependant pas permis leur utilisation à un stade industriel dans des procédés de raffinage ou de pétrochimie, ce qui a progressivement conduit à l'utilisation de nouveaux agents structurants comme des macromolécules amphiphiles de type copolymères à bloc, ces dernières conduisant à des matériaux mésostructurés possédant une structure généralement hexagonale, cubique ou lamellaire, des pores de taille uniforme comprise dans une gamme de 4 à 50 nm et des parois amorphes d'épaisseur comprise dans une gamme de 3 à 7 nm. A l'inverse des techniques "dip-coating" ou "aérosol" décrites ci-dessus, les matériaux ainsi définis ne sont pas obtenus par une concentration progressive des précurseurs inorganiques et de l'agent structurant au sein de la solution où ils sont présents mais sont classiquement obtenus par précipitation directe au sein d'une solution aqueuse ou dans des solvants de polarité marquée en jouant sur la valeur de la concentration micellaire critique de l'agent structurant. De plus, la synthèse de ces matériaux obtenus par précipitation nécessite une étape de mûrissement en autoclave et tous les réactifs ne sont pas intégrés aux produits en quantité stoechiométrique puisqu'ils peuvent se retrouver dans le surnageant. En fonction de la structure et du degré d'organisation souhaité pour le matériau mésostructuré final, ces synthèses peuvent avoir lieu en milieu acide (pH ≈ 1) (WO 99/37705) ou en milieu neutre (WO 96/39357), la nature de l'agent structurant utilisé jouant également un rôle prépondérant. Les particules élémentaires ainsi obtenues ne présentent pas de forme régulière et sont caractérisées généralement par une taille supérieure à 500 nm. Les matériaux aluminosilicates mésostructurés ainsi obtenus présentent des propriétés de stabilité hydrothermale accrues par rapport à leur homologues synthétisés via d'autres agents structurants, leurs propriétés d'acido-basicité demeurant à peu près similaires (1 < Si/Al < 1000). Des valeurs basses du rapport molaire Si/Al sont toutefois difficiles à obtenir car il n'est pas aisé d'incorporer des quantités importantes d'aluminium dans le matériau via ces procédés opératoires particuliers (D. Zaho, J. Feng, Q. Huo, N. Melosh, G. H. Fredrickson, B. F. Chmelke, G. D. Stucky, Science, 1998, 279, 548 ; Y. -H. Yue, A. Gédéon, J. -L. Bonardet, J. B. d'Espinose, N. Melosh, J. Fraissard, Stud. Surf. Sci. Catal., 2000,129, 209).

### Résumé de l'invention

L'invention concerne un matériau aluminosilicate mésostructuré constitué d'au moins deux particules sphériques élémentaires, chacune desdites particules sphériques étant constituée d'une matrice à base d'oxyde de silicium et d'oxyde d'aluminium, ayant une taille de pores comprise entre 1,5 et 30 nm, un rapport molaire Si/Al au moins égal à 1, présentant des parois amorphes d'épaisseur comprise entre 1 et 20 nm, lesdites particules sphériques élémentaires ayant un diamètre maximal de 10 µm. Le matériau selon l'invention présente une forte teneur en aluminium et le rapport molaire Si/Al est de préférence compris entre 1 et 10. La présente invention concerne également le procédé de préparation du matériau selon l'invention : il est obtenu par l'interaction d'au moins un tensioactif, ionique ou non ionique, avec au moins un précurseur aluminique et au moins un précurseur silicique, de préférence en milieu acide, la structure ordonnée du matériau étant consécutive au phénomène de micellisation ou d'auto-assemblage par évaporation induit par la technique dite aérosol.

### Intérêt de l'invention

Le matériau aluminosilicate selon l'invention est un matériau mésostructuré constitué de particules sphériques élémentaires, chacune desdites particules étant constituée d'une matrice à base d'oxyde de silicium et d'oxyde d'aluminium. Ladite matrice est mésostructurée et présente des parois amorphes d'épaisseur comprise entre 1 et 20 nm, une taille de pores uniforme comprise entre 1,5 et 30 nm et un rapport molaire Si/Al au moins égal à 1. Lesdites particules élémentaires sphériques ont un diamètre avantageusement compris entre 50 nm et 10 µm et de préférence entre 50 et 300 nm, la taille limitée des ces particules ainsi que leur forme parfaitement sphérique permettant d'avoir une meilleure diffusion des composés lors de l'emploi du matériau selon l'invention comme catalyseur ou adsorbant pour des applications dans le domaine du raffinage et de la pétrochimie, comparativement à des matériaux connus de l'état de la technique se présentant sous la forme de particules élémentaires de forme non homogène, c'est-à-dire irrégulière, et de taille généralement supérieure à 500 nm. La matrice constituant chacune desdites particules du matériau selon l'invention présente avantageusement un rapport molaire Si/Al compris entre 1 et 10 et très avantageusement entre 1 et 5 : le matériau selon l'invention présente une teneur élevée en aluminium, ce qui confère au matériau selon l'invention des propriétés d'acido-basicité intéressantes pour des applications en catalyse. Le matériau selon l'invention est aussi particulièrement intéressant pour la porosité organisée qu'il présente à l'échelle des mésopores.

### Exposé de l'invention

La présente invention a pour objet un matériau aluminosilicate mésostructuré constitué d'au moins deux particules sphériques élémentaires, chacune desdites particules sphériques étant constituée d'une matrice mésostructurée à base d'oxyde de silicium et d'oxyde d'aluminium, ayant une taille de pores comprise entre 1,5 et 30 nm, un rapport molaire Si/Al au moins égal à 1, présentant des parois amorphes d'épaisseur comprise entre 1 et 20 nm, lesdites particules sphériques élémentaires ayant un diamètre maximal de 10 µm.
Conformément à l'invention, la matrice à base d'oxyde de silicium et d'oxyde d'aluminium constituant chacune desdites particules sphériques du matériau aluminosilicate selon l'invention comporte avantageusement une forte teneur en aluminium : le rapport molaire Si/Al est de préférence compris entre 1 et 10 et de manière très préférée compris entre 1 et 5.
Par matériau mésostructuré, on entend au sens de la présente invention un matériau présentant une porosité organisée à l'échelle des mésopores de chacune desdites particules sphériques, c'est-à-dire une porosité organisée à l'échelle des pores ayant une taille uniforme comprise entre 1,5 et 30 nm et de préférence entre 1,5 et 10 nm et répartis de façon homogène et régulière dans chacune desdites particules (mésostructuration du matériau).

La matière située entre les mésopores de chacune desdites particules sphériques du matériau selon l'invention est amorphe et forme des parois, ou murs, dont l'épaisseur est comprise entre 1 et 20 nm. L'épaisseur des parois correspond à la distance séparant un pore d'un autre pore. L'organisation de la mésoporosité décrite ci-dessus conduit à une structuration de la matrice à base d'oxyde de silicium et d'oxyde d'aluminium, laquelle peut être hexagonale, hexagonale bidimentionnelle, vermiculaire ou cubique et de façon préférée vermiculaire.
Conformément à l'invention, lesdites particules sphériques élémentaires constituant le matériau selon l'invention ont un diamètre maximal de 10 µm, lequel est avantageusement compris entre 50 nm et 10 µm, et très avantageusement compris entre 50 et 300 nm. Plus précisément, lesdites particules sont présentes dans le matériau selon l'invention sous la forme d'aggrégats.
Le matériau selon l'invention présente avantageusement une surface spécifique comprise entre 100 et 1200 m²/g et de manière très avantageuse comprise entre 300 et 1000 m²/g.
La présente invention a également pour objet un procédé de préparation du matériau selon l'invention. Ledit procédé comprend : a) le mélange en solution d'au moins un tensioactif, d'au moins un précurseur aluminique et d'au moins un précurseur silicique ; b) l'atomisation par aérosol de la solution obtenue à l'étape a) pour conduire à la formation de gouttelettes sphériques de diamètre inférieur à 200 µm ; c) le séchage desdites gouttelettes et d) l'élimination dudit tensioactif pour l'obtention d'un matériau à porosité mésostructurée.
Les précurseurs silicique et aluminique utilisés dans l'étape a) du procédé selon l'invention sont des précurseurs d'oxydes inorganiques bien connus de l'Homme du métier. Le précurseur silicique est obtenu à partir de toute source de silice et avantageusement d'un précurseur silicate de sodium de formule SiO₂,NaOH, d'un précurseur chloré de formule SiCl₄, d'un précurseur organométallique de formule Si(OR)₄ où R = H, méthyle, éthyle ou d'un précurseur chloroalcoxyde de formule Si(OR)₄₋ₓClₓ où R = H, méthyle, éthyle, x étant compris entre 0 et 4. Le précurseur silicique peut également avantageusement être un précurseur organométallique de formule Si(OR)₄₋ₓR'ₓ où R = H, méthyle, éthyle et R' est une chaîne alkyle ou une chaîne alkyle fonctionnalisée, par exemple par un groupement thiol, amino, β dicétone, acide sulfonique, x étant compris entre 0 et 4. Le précurseur aluminique est avantageusement un sel inorganique d'aluminium de formule AIX₃, X étant un halogène ou le groupement NO₃. De préférence, X est le chlore. Le précurseur aluminique peut être aussi un précurseur organométallique de formule Al(OR")₃ ou R" = éthyle, isopropyle, n-butyle, s-butyle ou t-butyle ou un précurseur chélaté tel que l'aluminium acétylacétonate (Al(CH₇O₂)₃). Le précurseur aluminique peut aussi être un oxyde ou un hydroxyde d'aluminium.

Le tensioactif utilisé pour la préparation du mélange selon l'étape a) du procédé selon l'invention est un tensioactif ionique ou non ionique ou un mélange des deux. De préférence, le tensioactif ionique est choisi parmi les ions phosphonium et ammonium et très préférentiellement parmi les sels d'ammonium quaternaire comme le bromure de céthyltriméthylammonium (CTAB). De préférence, le tensioactif non ionique se présente sous la forme d'un copolymère possédant au moins deux parties de polarité différente ce qui lui confère des propriétés de macromolécule amphiphile. Il peut s'agir notamment d'un copolymère choisi dans la liste non exhaustive des familles de copolymères suivantes : les copolymères fluorés (-[CH₂-CH₂-CH₂-CH₂-O-CO-R1]- avec R1 = C₄F₉, C₈F₁₇, etc.), les copolymères biologiques comme les polyacides aminés (poly-lysine, alginates, etc.), les dendrimères, les copolymères bloc constitués de chaînes de poly(oxydes d'alkylène) et tout autre copolymère à caractère amphiphile connu de l'Homme du métier (S. Förster, M. Antionnetti, Adv.Mater, 1998, 10, 195-217, S. Förster, T.Plantenberg, Angew. Chem. Int. Ed, 2002, 41, 688-714, H. Cölfen, Macromol. Rapid Commun, 2001, 22, 219-252). De manière préférée, on utilise dans le cadre de la présente invention un copolymère choisi parmi la famille des copolymères blocs constitués de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, deux des blocs sont constitués d'une chaîne de poly(oxyde d'alkylène) de nature hydrophile tandis que l'autre bloc, situé entre les deux blocs aux parties hydrophiles, est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)_{y}, des chaînes de poly(oxyde de butylène) ou des chaînes mixtes dont chaque chaîne est un mélange de plusieurs monomères d'oxyde d'alkylène. De manière très préférée, dans le cas d'un copolymère à trois blocs, on utilise un composé de formule (PEO)ₓ-(PPO)_{y}-(PEO)_{z} où x est compris entre 5 et 106, y est compris entre 33 et 70 et z est compris entre 5 et 106. De préférence, les valeurs de x et z sont identiques. On utilise très avantageusement un composé dans lequel x = 20, y = 70 et z = 20 (poly(oxyde d'éthylène)₂₀-poly(oxyde de propylène)₇₀-poly(oxyde d'éthylène)₂₀ ou encore appelé P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans l'étape a) du procédé selon l'invention. Pour un copolymère à quatre blocs, deux des blocs sont constitués d'une chaîne de poly(oxyde d'alkylène) de nature hydrophile et les deux autres blocs sont constitués d'une chaîne de poly(oxyde d'alkylène) de nature hydrophobe.
La solution dans laquelle sont mélangés au moins un précurseur silicique, au moins un précurseur aluminique et au moins un tensioactif conformément à l'étape a) du procédé selon l'invention, peut être acide, neutre ou basique. De préférence, ladite solution est acide et présente un pH maximal égal à 2, de préférence compris entre 0 et 2. Les acides utilisés pour obtenir une solution acide de pH maximal égal à 2 sont, de façon non exhaustive, l'acide chlorhydrique, l'acide sulfurique et l'acide nitrique. Ladite solution peut être aqueuse ou peut être un mélange eau-solvant organique, le solvant organique étant préférentiellement un solvant polaire, notamment un alcool, préférentiellement de l'éthanol. Ladite solution peut aussi être pratiquement organique, de préférence pratiquement alcoolique, la quantité d'eau étant telle que l'hydrolyse des précurseurs inorganiques soit assurée (quantité stoechiométrique). De manière très préférée, ladite solution dans laquelle sont mélangés au moins un précurseur silicique, au moins un précurseur aluminique et au moins un tensioactif est un mélange aquo-organique acide, de manière très préférée un mélange eau acide-alcool.

Les concentrations en précurseurs silicique et aluminique sont définies par le rapport molaire Si/Al, celui-ci étant au moins égal à 1, de préférence compris dans la gamme de 1 à 1000, plus précisément dans la gamme de 1 à 10 et de façon très préférentielle dans la gamme de 1 à 5. La concentration initiale en tensioactif introduit dans le mélange conformément à l'étape a) du procédé selon l'invention est définie par c₀ et c₀ est définie par rapport à la concentration micellaire critique (c_{mc}) bien connue de l'Homme du métier. La c_{mc} est la concentration limite au delà de laquelle se produit le phénomène d'auto-arrangemant des molécules du tensioactif dans la solution. La concentration c₀ peut être inférieure, égale ou supérieure à la c_{mc}, de préférence elle est inférieure à la c_{mc}. Dans une mise en oeuvre préférée du procédé selon l'invention, la concentration c₀ est inférieure à la c_{mc} et ladite solution visée à l'étape a) du procédé de préparation selon l'invention est un mélange eau acide- alcool.
L'étape d'atomisation du mélange selon l'étape b) du procédé de préparation selon l'invention produit des gouttelettes sphériques de diamètre préférentiellement compris dans la gamme de 2 à 200 µm. La distribution en taille de ces gouttelettes est de type lognormale. Le générateur d'aérosol utilisé ici est un appareil commercial de modèle 3078 fourni par TSI.

L'atomisation de la solution se fait dans une chambre dans laquelle est envoyé un gaz vecteur, un mélange O₂/N₂ (air sec), sous une pression P égale à 1,5 bars. Conformément à l'étape c) du procédé de préparation selon l'invention, on procède au séchage desdites gouttelettes. Ce séchage est réalisé par le transport desdites gouttelettes via le gaz vecteur, le mélange O₂/N₂, dans des tubes en verre, ce qui conduit à l'évaporation progressive de la solution, par exemple de la solution aquo-organique acide, et ainsi à l'obtention de particules élémentaires sphériques. Ce séchage est parfait par un passage desdites particules dans un four dont la température peut être ajustée, la gamme habituelle de température variant de 50 à 600°C et de préférence de 80 à 400°C, le temps de résidence de ces particules dans le four étant de l'ordre de 3 à 4 secondes. Les particules sont alors récoltées dans un filtre et constituent le matériau selon l'invention. Une pompe placée en fin de circuit favorise l'acheminement des espèces dans le dispositif expérimental aérosol.

Dans le cas où la solution visée à l'étape a) du procédé de préparation selon l'invention est un mélange eau-solvant organique, de préférence acide, il est préféré au cours de l'étape a) du procédé de préparation selon l'invention que la concentration en tensioactif à l'origine de la mésostructuration de la matrice soit inférieure à la concentration micellaire critique de sorte que l'évaporation de ladite solution aquo-organique, préférentiellement acide, au cours de l'étape b) du procédé de préparation selon l'invention par la technique d'aérosol induise un phénomène de micellisation ou d'auto-assemblage conduisant à la mésostructuration de la matrice du matériau selon l'invention. Lorsque c₀<c_{mc}, la mésostructuration de la matrice du matériau selon l'invention et préparé selon le procédé décrit ci-dessus est consécutive à une concentration progressive, au sein de chaque gouttelette, du précurseur silicique, du précurseur aluminique et du tensioactif, jusqu'à une concentration en tensioactif c>c_{mc} résultant d'une évaporation de la solution aquo-organique, préférentiellement acide.
De manière générale, l'augmentation de la concentration conjointe des précurseurs silicique et aluminique et du tensioactif provoque la précipitation des précurseurs aluminique et silicique autour du tensioactif auto-organisé et en conséquence la structuration du matériau selon l'invention. Les interactions phases inorganique / inorganique, phases organique /organique et phases organique / inorganique conduisent par un mécanisme d'auto-assemblage coopératif à l'hydrolyse / condensation des précurseurs inorganiques silicique et aluminique autour du tensioactif. La technique aérosol est particulièrement avantageuse pour la mise en oeuvre de l'étape b) du procédé selon l'invention de manière à contraindre les réactifs présents dans la solution initiale à interagir entre eux, aucune perte de matière hormis les solvants n'étant possible, la totalité des éléments aluminium et silicium présents initialement étant ainsi parfaitement conservée tout au long du processus au lieu d'être éliminée lors des étapes de filtration et de lavages rencontrées dans des procédés de synthèse classiques connues de l'homme de l'art.
L'élimination du tensioactif au cours de l'étape d) du procédé selon l'invention afin d'obtenir le matériau selon l'invention à porosité mésostructurée est avantageusement réalisée par des procédés d'extraction chimique ou par traitement thermique et de préférence par calcination sous air dans une gamme de température de 300 à 1000°C et plus précisément dans une gamme de 500 à 600°C pendant une durée de 1 à 24 heures et de façon préférée pendant une durée de 2 à 6 heures.

Le matériau aluminosilicate mésostructuré à forte teneur en aluminium de la présente invention peut être obtenu sous forme de poudre, de billes, de pastilles, de granulés ou d'extrudés, les opérations de mises en forme étant réalisées via les techniques classiques connues de l'homme de l'art. De préférence, le matériau aluminosilicate mésostructuré selon l'invention est obtenu sous forme de poudre, laquelle est constituée de particules sphériques élémentaires ayant un diamètre maximal de 10 µm et de préférence compris entre 50 et 300 nm, ce qui facilite la diffusion éventuelle des composés dans le cas de l'emploi du matériau selon l'invention comme catalyseur ou adsorbant dans des applications de raffinage ou de pétrochimie.

Le matériau aluminosilicate mésostructuré de l'invention est caractérisé par plusieurs techniques d'analyses et notamment par Diffraction des Rayons X aux bas angles (DRX aux bas angles), par Isotherme d'adsorption d'azote, par Microscopie électronique à transmission (MET), par Fluorescence X (FX). La technique de Diffraction des Rayons X aux bas angles (valeurs de l'angle 2θ comprises entre 0,5 et 3°) permet de caractériser la périodicité à l'échelle nanométrique générée par la mésoporosité organisée de la matrice mésostructurée du matériau de l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter réticulaires d₍ₕₖₗ₎ caractéristiques de la symétrie structurale du matériau ((hkl) étant les indices de Miller du réseau réciproque) par la relation de Bragg : 2 d ₍ₕₖₗ₎ * sin (θ) = n * λ. Cette indexation permet alors la détermination des paramètres de maille (abc) du réseau direct, la valeur de ces paramètres étant fonction de la structure hexagonale, cubique, ou vermiculaire obtenue. Pour exemple, le diffractogramme de Rayons X aux bas angles d'un matériau aluminosilicate mésostructuré obtenu selon le procédé de l'invention via l'emploi du copolymère à bloc particulier dénommé poly(oxyde d'éthylène)₂₀-poly(oxyde de propylène)₇₀-poly(oxyde d'éthylène)₂₀ (PEO₂₀-PPO₇₀₋PEO₂₀ ou Pluronic 123) présente un pic de corrélation parfaitement résolu correspondant à la distance de corrélation entre pores d caractéristique d'une structure de type vermiculaire et définie par la relation de Bragg 2 d * sin (θ) = n * λ.
L'analyse Isotherme d'adsorption d'azote correspondant à l'adsorption physique de molécules d'azote dans la porosité du matériau via une augmentation progressive de la pression à température constante renseigne sur les caractéristiques texturales particulières du matériau selon l'invention. En particulier, elle permet d'accéder à la surface spécifique et à la distribution mésoporeuse du matériau. On entend par surface spécifique, la surface spécifique B.E.T. (S_{BET} en m²/g) déterminée par adsorption d'azote conformément à la norme ASTM D 3663-78 établie à partir de la méthode BRUNAUER-EMMETT-TELLER décrite dans le périodique " The Journal of American Society", 60, 309, (1938). La distribution poreuse représentative d'une population de mésopores centrée dans une gamme de 1,5 à 50 nm est déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit, le diamètre des mésospores φ de la matrice mésostructurée donné correspond au diamètre moyen à la désorption d'azote défini comme étant un diamètre tel que tous les pores inférieurs à ce diamètre constituent 50% du volume poreux (Vp) mesuré sur la branche de désorption de l'isotherme azote. De plus, l'allure de l'isotherme d'adsorption d'azote et de la boucle d'hystérésis peut renseigner sur la nature de la mésoporosité. Pour exemple, l'isotherme d'adsorption d'azote relative au matériau aluminosilicate mésostructuré selon l'invention et obtenu grâce au procédé de l'invention lorsque l'on utilise le copolymère à bloc particulier dénommé poly(oxyde d'éthylène)₂₀-poly(oxyde de propylène)₇₀-poly(oxyde d'éthylène)₂₀ (PEO₂₀-PPO₇₀-PEO₂₀ ou Pluronic 123 ou P123) est caractérisée par une isotherme d'adsorption de classe IV et une boucle d'hystérésis de type H1, la courbe de distribution poreuse associée étant quant à elle représentative d'une population de mésopores de taille uniforme centrée dans une gamme de 1,5 à 30 nm. La différence entre la valeur du diamètre des pores φ et la distance de corrélation entre pores d défini par DRX aux bas angles comme décrit ci-dessus permet d'accéder à la grandeur e où e = d - φ et est caractéristique de l'épaisseur des parois amorphes de la matrice mésostructurée constituant chacune des particules sphériques du matériau aluminosilicate mésostructuré.
L'analyse par microscopie électronique par transmission (MET) est une technique également largement utilisée pour caractériser la structure de ces matériaux. Celle-ci permet la formation d'une image du solide étudié, les contrastes observés étant caractéristiques de l'organisation structurale, de la texture ou bien de la morphologie des particules observées, la résolution de la technique atteignant au maximum 0,2 nm. Dans l'exposé qui suit, les photos MET seront réalisées à partir de coupes microtomes de l'échantillon afin de visualiser une section d'une particule sphérique élémentaire du matériau selon l'invention. Pour exemple, les images MET obtenues pour un matériau aluminosilicate mésostructuré selon l'invention et obtenu grâce au procédé de l'invention lorsqu'on utilise le copolymère comme décrit précédemment via l'emploi du copolymère à bloc particulier dénommé Pluronic 123 présentent des particules élémentaires sphériques ayant une mésostructure vermiculaire, la matière étant définie par les zones sombres. L'analyse de l'image permet également d'accéder aux paramètres d, φ et e caractéristiques de la matrice mésostructurée définis précédemment.
La morphologie et la distribution en taille des particules élémentaires ont été établies par analyse de photos obtenues par MEB.
La structure de la matrice mésostructurée constituant chacune des particules du matériau selon l'invention peut être cubique, vermiculaire ou hexagonale en fonction de la nature du copolymère choisi comme agent structurant. A titre d'exemple, un matériau aluminosilicate mésostructuré obtenu comme décrit précédemment via l'emploi du copolymère à bloc particulier dénommé poly(oxyde d'éthylène)₂₀-poly(oxyde de propylène)₇₀-poly(oxyde d'éthylène)₂₀ (PEO₂₀-PPO₇₀-PEO₂₀ ou Pluronic 123) présente une structure vermiculaire.

La présente invention concerne l'utilisation du matériau aluminosilicate mésostructuré selon l'invention comme adsorbant pour le contrôle de la pollution ou comme tamis moléculaire pour la séparation. La présente invention a donc également pour objet un adsorbant comprenant le matériau aluminosilicate mésostructuré selon l'invention. Il est également avantageusement utilisé comme solide acide pour catalyser des réactions, par exemple celles intervenant dans les domaines du raffinage et de la pétrochimie.

Lorsque le matériau aluminosilicate mésostructuré selon l'invention est utilisé comme catalyseur, ce matériau peut être associé à une matrice inorganique qui peut être inerte ou catalytiquement active et à une phase métallique. La matrice inorganique peut être présente simplement comme liant pour maintenir ensemble les particules dudit matériau sous les différentes formes connues des catalyseurs (extrudés, pastilles, billes, poudres) ou bien peut être ajoutée comme diluant pour imposer le degré de conversion dans un procédé qui sinon progresserait à une allure trop rapide, conduisant à un encrassement du catalyseur en conséquence d'une formation importante de coke. Des matrices inorganiques typiques sont notamment des matières de support pour les catalyseurs comme les différentes formes de silice, d'alumine, de silice-alumine, la magnésie, la zircone, les oxydes de titane, de bore, les phosphates d'aluminium, de titane, de zirconium, les argiles telles que le kaolin, la bentonite, la montmorillonite, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés. La matrice inorganique peut être un mélange de différents composés, en particulier d'une phase inerte et d'une phase active. Ledit matériau de la présente invention peut aussi être associé à au moins une zéolithe et jouer le rôle de phase active principale ou d'additif. La phase métallique peut être introduite intégralement sur ledit matériau de l'invention. Elle peut être également introduite intégralement sur la matrice inorganique ou encore sur l'ensemble matrice inorganique - solide mésostructuré par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.
Les compositions catalytiques comportant le matériau de la présente invention conviennent de façon générale à la mise en oeuvre des principaux procédés de transformation des hydrocarbures et des réactions de synthèse de composés organiques.

Les compositions catalytiques comportant le matériau de l'invention trouvent avantageusement leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage, de reformage, d'hydrogénation et de déshydrogénation, d'oxydation, d'halogénation, d'hydrocraquage, d'hydroconversion, d'hydrotraitement, d'hydrodésulfuration et d'hydrodéazotation, d'élimination catalytique des oxydes d'azote, les dites réactions impliquant des charges comprenant des hydrocarbures aliphatiques saturés et insaturés, des hydrocarbures aromatiques, des composés organiques oxygénés et des composés organiques contenant de l'azote et/ou du soufre ainsi que des composés organiques contenant d'autres groupes fonctionnels.

L'invention est illustrée au moyen des exemples suivants.

### EXEMPLES

Dans les exemples qui suivent, la technique aérosol utilisée est celle décrite ci-dessus dans l'exposé de l'invention.

### Exemple 1 (invention) : Préparation d'un matériau aluminosilicate de rapport Si/Al = 5.

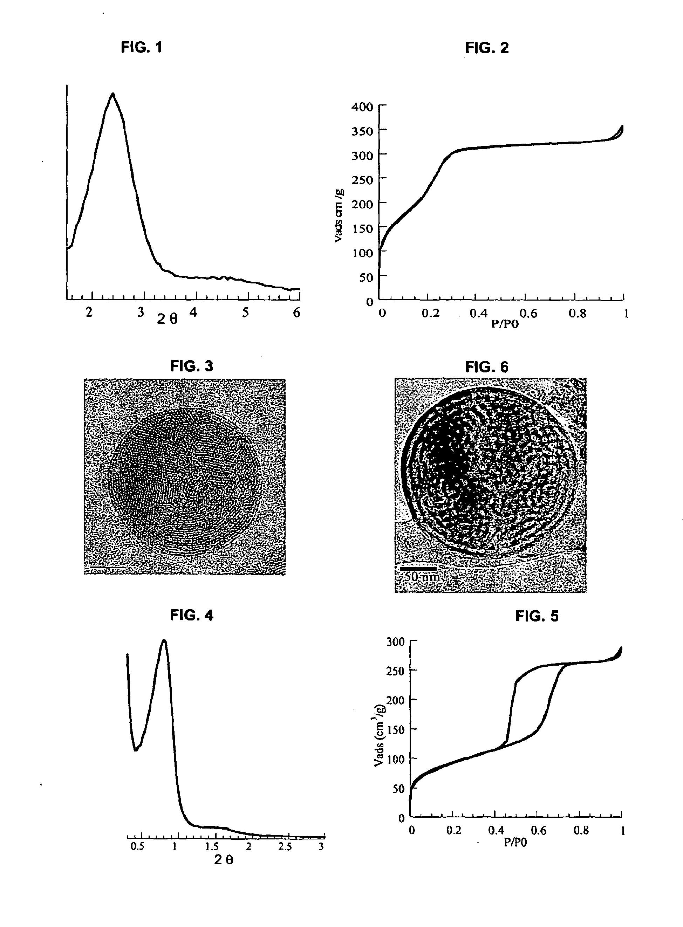

1,03 g de trichlorure d'aluminium sont ajoutés à une solution contenant 30g d'éthanol, 14,5 ml d'eau, 0,036 ml d'HCl et 1,4 g de tensioactif CTAB. L'ensemble est laissé sous agitation à température ambiante jusqu'à dissolution complète du précurseur aluminique. 3,59 g de tetraéthylorthosilicate (TEOS) sont alors additionnés. Après une agitation de 10 mn à température ambiante, l'ensemble est envoyé dans la chambre d'atomisation du générateur d'aérosol et la solution est pulvérisée sous la forme de fines gouttelettes sous l'action du gaz vecteur (air sec) introduit sous pression (P = 1,5 bars) tel qu'il a été décrit dans la description ci-dessus. Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles (figure 1), par isotherme d'adsorption d'azote (figure 2; la grandeur P0 indiquée en abscisse est la pression de vapeur saturante), par MET (figure 3) et par fluorescence X. L'analyse MET montre que le matériau final présente une mésoporosité organisée caractérisée par une structure vermiculaire. L'analyse Isotherme d'adsorption d'azote conduit à une surface spécifique du matériau final de S_{BET} = 800 m²/g et à un diamètre mésoporeux de φ = 2,4 nm. L'analyse DRX aux petits angles conduit à la visualisation d'un pic de corrélation à l'angle 2θ = 2,4. La relation de Bragg 2 d * sin (1,2) = 1,5406 permet de calculer la distance d de corrélation entre les pores de la matrice mésotructurée, soit d = 3,7 nm. L'épaisseur des parois du matériau mésostructurée définie par e = d - φ est donc de e = 1,3 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

### Exemple 2 (invention) : Préparation d'un matériau aluminosilicate de rapport Si/Al = 10.

0,52 g de trichlorure d'aluminium sont ajoutés à une solution contenant 30g d'éthanol, 14,7 ml d'eau, 0,036 ml d'HCl et 1,4 g de tensioactif P123. L'ensemble est laissé sous agitation à température ambiante jusqu'à dissolution complète du précurseur aluminique. 4,09 g de tetraéthylorthosilicate (TEOS) sont alors additionnés. Après une agitation de 18 heures à température ambiante, l'ensemble est envoyé dans la chambre d'atomisation du générateur d'aérosol et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles (figure 4), par isotherme d'adsorption d'azote (figure 5 ; la grandeur P0 indiquée en abscisse est la pression de vapeur saturante), par MET (figure 6) et par fluorescence X. L'analyse MET montre que le matériau final présente une mésoporosité organisée caractérisée par une structure vermiculaire. L'analyse Isotherme d'adsorption d'azote conduit à une surface spécifique du matériau final de S_{BET} = 320 m²/g et à un diamètre mésoporeux de 5,3 nm. L'analyse DRX aux petits angles conduit à la visualisation d'un pic de corrélation à l'angle 2θ = 0,72. La relation de Bragg 2 d * sin (0,36) = 1,5406 permet de calculer la distance d de corrélation entre les pores de la matrice mésostructurée, soit d = 12,2 nm. L'épaisseur des parois du matériau mésostructurée définie par e = d - φ est donc de e = 6,9 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

### Exemple 3 (invention) : Préparation d'un matériau aluminosilicate de rapport Si/Al = 3.

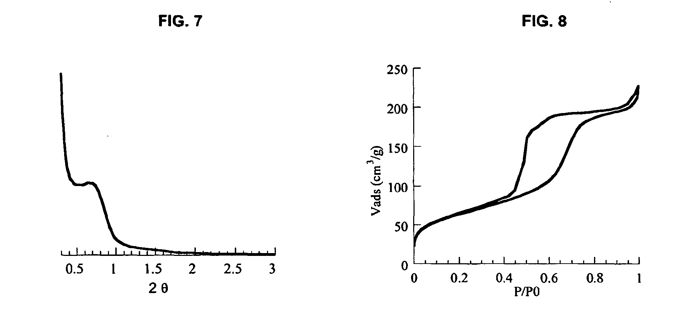

1,56 g de trichlorure d'aluminium sont ajoutés à une solution contenant 30g d'éthanol, 14,2 ml d'eau, 0,036 ml d'HCl et 1,4 g de tensioactif P123. L'ensemble est laissé sous agitation à température ambiante jusqu'à dissolution complète du précurseur aluminique. 3,14 g de tetraéthylorthosilicate (TEOS) sont alors additionnés. Après une agitation de 18 heures à température ambiante, l'ensemble est envoyé dans la chambre d'atomisation du générateur d'aérosol et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles (figure 7), par isotherme d'adsorption d'azote (figure 8 ; la grandeur P0 indiquée en abscisse est la pression de vapeur saturante), par MET et par fluorescence X. L'analyse MET montre que le matériau final présente une mésoporosité organisée caractérisée par une structure vermiculaire. L'analyse Isotherme d'adsorption d'azote conduit à une surface spécifique du matériau final de S_{BET} = 220 m²/g et à un diamètre mésoporeux de φ = 5,9 nm. L'analyse DRX aux petits angles conduit à la visualisation d'un pic de corrélation à l'angle 2θ = 0,72. La relation de Bragg 2 d * sin (0,36) = 1,5406 permet de calculer la distance d de corrélation entre les pores de la matrice mésotructurée, soit d = 12,2 nm. L'épaisseur des parois du matériau mésostructurée définie par e = d - φ est donc de e = 6,3 nm. Un cliché MEB des particules élémentaires sphériques ainsi obtenues indique que ces particules ont une taille caractérisée par un diamètre variant de 50 à 700 nm, la distribution en taille de ces particules étant centrée aux alentours de 300 nm.

## Revendications

1. Matériau aluminosilicate mésostructuré constitué d'au moins deux particules sphériques élémentaires, chacune desdites particules sphériques étant constituée d'une matrice mésostructurée à base d'oxyde de silicium et d'oxyde d'aluminium, présentant des mésopores de diamètre φ compris entre 1,5 et 30 nm, un rapport molaire Si/Al au moins égal à 1, présentant des parois amorphes d'épaisseur comprise entre 1 et 20 nm, ladite épaisseur étant égale à la différence entre la valeur du diamètre des mésopores *φ* et la distance de corrélation d entre les mésopores définie par DRX aux bas angles, lesdites particules sphériques élémentaires ayant un diamètre maximal de 10 µm.

2. Matériau selon la revendication 1 tel que le rapport molaire Si/Al est compris entre 1 et 10.

3. Matériau selon la revendication 1 ou la revendication 2 tel que le rapport molaire Si/Al est compris entre 1 et 5.

4. Matériau selon l'une des revendications 1 à 3 tel que le diamètre des mésopores de ladite matrice est comprise entre 1,5 et 10 nm.

5. Matériau selon l'une des revendications 1 à 4 tel que lesdites particules sphériques élémentaires ont un diamètre compris entre 50 et 300 nm.

6. Matériau selon l'une des revendications 1 à 5 tel qu'il présente une surface spécifique comprise entre 100 et 1200 m²/g.

7. Matériau selon l'une des revendications 1 à 6 tel qu'il présente une surface spécifique comprise entre 300 et 1000 m²/g.

8. Matériau selon l'une des revendications 1 à 7 tel que ladite matrice à base d'oxyde de silicium et d'oxyde d'aluminium présente une structure hexagonale, vermiculaire ou cubique.

9. Procédé de préparation d'un matériau aluminosilicate mésostructuré selon l'une des revendications 1 à 8 comprenant a) le mélange en solution d'au moins un tensioactif, d'au moins un précurseur aluminique et d'au moins un précurseur silicique ; b) l'atomisation par aérosol de la solution obtenue à l'étape a) pour conduire à la formation de gouttelettes sphériques de diamètre inférieur à 200 µm ; c) le séchage desdites gouttelettes et d) l'élimination dudit tensioactif pour l'obtention d'un matériau à porosité mésostructurée.

10. Procédé selon la revendication 9 dans lequel le précurseur silicique est un précurseur organométallique de formule Si(OR)₄ où R = H, méthyle, éthyle.

11. Procédé selon la revendication 9 ou 10 dans lequel le précurseur aluminique est un sel inorganique d'aluminium de formule AlX₃, X étant un halogène ou le groupement NO₃.

12. Procédé selon l'une des revendications 9 à 11 dans lequel le tensioactif est un tensioactif ionique choisi parmi les ions phosphonium et ammonium.

13. Procédé selon l'une des revendications 9 à 11 dans lequel le tensioactif est un tensioactif non-ionique se présentant sous la forme d'un copolymère possédant au moins deux parties de polarité différente.

14. Procédé selon la revendication 13 dans lequel ledit copolymère bloc contient deux, trois ou quatre blocs, chaque bloc étant constitué d'une chaîne de poly(oxyde d'alkylène).

15. Procédé selon la revendication 14 dans lequel le tensioactif non-ionique est le poly(oxyde d'éthylène)₂₀-poly(oxyde de propylène)₇₀-poly(oxyde d'éthylène)₂₀.

16. Procédé selon l'une des revendications 9 à 15 dans lequel ladite solution est un mélange eau-alcool.

17. Procédé selon l'une des revendications 9 à 16 dans lequel ladite solution est acide.

18. Adsorbant comprenant le matériau aluminosilicate mésostructuré selon l'une des revendications 1 à 8 ou préparé selon l'une des revendications 9 à 17.

19. Catalyseur comprenant le matériau aluminosilicate mésostructuré selon l'une des revendications 1 à 8 ou préparé selon l'une des revendications 9 à 17.

## Claims

1. A mesostructured aluminosilicate material constituted by at least two spherical elementary particles, each of said spherical particles being constituted by a mesostructured matrix based on silicon oxide and aluminium oxide, having mesopores of diameter φ in the range between 1.5 to 30 nm, a Si/Al molar ratio of at least 1, having amorphous walls with a thickness in the range 1 to 20 nm, said thickness being equal to the difference between the value for the mesopore diameter φ and the correlation distance d between mesopores pores defined by small angle XRD" said spherical elementary particles having a maximum diameter of 10 µm.

2. A material according to claim 1, in which the Si/Al molar ratio is in the range 1 to 10.

3. A material according to claim 1 or claim 2, in which the Si/Al molar ratio is in the range 1 to 5.

4. A material according to one of claims 1 to 3, in which the pore size of said matrix is in the range 1.5 to 10 nm.

5. A material according to one or claims 1 to 4, in which the diameter or said spherical elementary particles is in the range 50 to 300 nm.

6. A material according to one of claims 1 to 5, having a specific surface area in the range 100 to 1200 m²/g.

7. A material according to one of claims 1 to 6, having a specific surface area in the range 300 to 1000 m²/g.

8. A material according to one or claims 1 to 7, in which said matrix based on silicon oxide and aluminium oxide has a hexagonal, vermicular or cubic structure.

9. A process for preparing a mesostructured aluminosilicate material according to one of claims 1 to 8, comprising a) mixing, in solution, at least one surfactant, at least one aluminic precursor and at least one silicic precursor; b) atomizing by aerosol the solution obtained in a) to produce spherical droplets with a diameter of less than 200 µm; c) drying said droplets and d) eliminating said surfactant to obtain a material with a mesostructured porosity.

10. A process according to claim 9, in which the silicic precursor is an organometallic precursor with formula Si(OR)₄ in which R = H, methyl or ethyl.

11. A process according to claim 9 or claim 10, in which the aluminic precursor is an inorganic aluminium salt with formula AlX₃, X being a halogen or an NO₃ group.

12. A process according to one of claims 9 to 11, in which the surfactant is an ionic surfactant selected from phoshonium and ammonium ions.

13. A process according to one of claims 9 to 11, in which the surfactant is a non ionic surfactant in the form of a copolymer having at least two portions with differing polarities.

14. A process according to claim 13, in which said block copolymer contains two, three or four blocks, each block being constituted by a poly(alkylene oxide) chain.

15. A process according to claim 14, in which the non ionic surfactant is poly(ethylene oxide)₂₀ - poly(propylene oxide)₇₀ - poly(ethylene oxide)₂₀.

16. A process according to one of claims 9 to 15, in which said solution is a water-alcohol mixture.

17. A process according to one of claims 9 to 16, in which said solution is acidic.

18. An adsorbant comprising a mcsostructurcd aluminosilicate material according to one of claims 1 to 8 or prepared according to one of claims 9 to 17.

19. A catalyst comprising a mesostructured aluminosilicate material according to one of claims 1 to 8 or prepared according to one of claims 9 to 17.

## Patentansprüche

1. Mesostrukturierter Aluminosilicat-Werkstoff, der aus mindestens zwei kugelförmigen Elementarpartikeln besteht, wobei jeder dieser kugelförmigen Partikel aus einer mesostrukturierten Matrix auf Grundlage von Siliciumoxid und Aluminiumoxid besteht, wobei sie Mesoporen mit einem Durchmesser 0 im Bereich von 1,5 bis 30 nm, ein Si-Al-Molverhältnis von mindestens 1 aufweisen, amorphe Wände mit einer Dicke im Bereich von 1 bis 20 nm aufweisen, wobei die Dicke gleich dem Unterschied zwischen dem Wert des Durchmessers der Mesoporen 0 und dem Korrelationsabstand d zwischen den Mesoporen gemäß Kleinwinkel-Röntgenbeugungsbestimmung ist, wobei die kugelförmigen Elementarpartikel einen Durchmesser von höchstens 10 µm haben

2. Werkstoff nach Anspruch 1, derart, dass das Si/Al-Molverhältnis im Bereich von 1 bis 10 liegt.

3. Werkstoff nach Anspruch 1 oder Anspruch 2, derart, dass das Si/Al-Molverhältnis im Bereich von 1 bis 5 liegt.

4. Werkstoff nach einem der Ansprüche 1 bis 3, derart, dass der Durchmesser der Mesoporen der Matrix im Bereich von 1,5 bis 10 nm liegt.

5. Werkstoff nach einem der Ansprüche 1 bis 4, derart, dass die kugelförmigen Elementarpartikel einen Durchmesser im Bereich von 50 bis 300 nm haben.

6. Werkstoff nach einem der Ansprüche 1 bis 5, derart, dass er eine spezifische Oberfläche im Bereich von 100 bis 1200 m²/g aufweist.

7. Werkstoff nach einem der Ansprüche 1 bis 6, derart, dass er eine spezifische Oberfläche im Bereich von 300 bis 1000 m²/g aufweist

8. Werkstoff nach einem der Ansprüche 1 bis 7, derart, dass die Matrix auf Grundlage von Siliciumoxid und Aluminiumoxid eine hexagonale, vermikuläre oder kubische Struktur aufweist.

9. Verfahren zur Herstellung eines mesostrukturierten Aluminosilicat-Werkstoffs nach einem der Ansprüche 1 bis 8, welches a) das Vermischen mindestens eines Tensids, mindestens einer Aluminiumoxid-Vorläufersubstanz und mindestens einer Siliciumdioxid-Vorläufersubstanz in Lösung; b) das Versprühen der Lösung, die in Schritt a) erhalten wurde, als Aerosol zwecks Bildung kugelförmiger Tröpfchen mit einem Durchmesser von weniger als 200 µm; c) das Trocknen der Tröpfchen und d) das Entfernen des Tensids zwecks Gewinnung eines Werkstoffs mit mesostrukturierter Porosität umfasst.

10. Verfahren nach Anspruch 9, wobei es sich bei der Siliciumdioxid-Vorläufersubstanz um eine organometallische Vorläufersubstanz der Formel Si(OR)₄ handelt, wobei R = H, Methyl, Ethyl ist.

11. Verfahren nach Anspruch 9 oder 10, wobei es sich bei der Aluminiumoxid-Vorläufersubstanz um ein anorganisches Aluminiumsalz der Formel AlX₃ handelt, wobei X ein Halogen oder eine NO₃-Gruppe ist.

12. Verfahren nach einem der Ansprüche 9 bis 11, wobei es sich bei dem Tensid um ein ionisches Tensid handelt, das aus den Phosphonium- und Ammoniumionen gewählt ist.

13. Verfahren nach einem der Ansprüche 9 bis 11, wobei es sich bei dem Tensid um ein nichtionisches Tensid handelt, das in Form eines Copolymers vorliegt, welches mindestens zwei Abschnitte von unterschiedlicher Polarität besitzt.

14. Verfahren nach Anspruch 13, wobei das Blockcopolymer zwei, drei oder vier Blöcke enthält, wobei jeder Block aus einer Polyalkylenoxidkette besteht.

15. Verfahren nach Anspruch 14, wobei es sich bei dem nichtionischen Tensid um Polyethylenoxid₂₀Polypropylenoxid₇₀Polyethylenoxid₂₀ handelt

16. Verfahren nach einem der Ansprüche 9 bis 15, wobei es sich bei der Lösung um eine Wasser-Alkohol-Mischung handelt.

17. Verfahren nach einem der Ansprüche 9 bis 16, wobei es sich bei der Lösung um eine Säure handelt.

18. Adsorptionsmittel, welches den mesostrukturierten Aluminosilicat-Werkstoff nach einem der Ansprüche 1 bis 8, oder der nach einem der Ansprüche 9 bis 17 hergestellt ist, umfasst.

19. Katalysator, welcher den mesostrukturierten Aluminosilicat-Werkstoff nach einem der Ansprüche 1 bis 8, oder der nach einem der Ansprüche 9 bis 17 hergestellt ist, umfasst.
